# EUROPÄISCHE PATENTANMELDUNG

(11) **EP 4 332 308 A1**
(43) Veröffentlichungstag der Anmeldung: **06.03.2024**
(21) Anmeldenummer: 23188598.9
(22) Anmeldetag: 31.07.2023
(51) Int. Cl.: E02F 9/20, G05G 1/00

(54) **ZIVILES KETTENFAHRZEUG**

(30) Priorität: 30.08.2022 DE 102022208965
(71) Anmelder: Kässbohrer Geländefahrzeug AG, 88471 Laupheim (DE)
(72) Erfinder: Berg, Tobias, 88487 Mietingen (DE); Pfetsch, Tobias, 89134 Blaustein (DE); Schmied, Markus, 89233 Neu-Ulm (DE); Ströbele, Roman, 89195 Staig (DE); Kling, Jochen, 89233 Neu-Ulm (DE)
(74) Vertreter: Patentanwälte Ruff, Wilhelm, Beier, Dauster & Partner mbB

(57) **Zusammenfassung**

1 Ein ziviles Kettenfahrzeug (1), aufweisend eine Richtungssteuereinrichtung (2) zur manuellen Steuerung von Lenk- und Fahrtrichtungsfunktionen des Kettenfahrzeugs (1) und eine Steuerungseinheit (3) für wenigstens eine Arbeitsfunktion des Kettenfahrzeugs (1), ist bekannt.

2 Erfindungsgemäß ist vorgesehen, dass die Richtungssteuereinrichtung (2) und die Steuerungseinheit (3) für die wenigstens eine Arbeitsfunktion in einer gemeinsamen Bedienungseinrichtung (4) integriert sind, die einen einzelnen manuell betätigbaren und in mehrere Bedienstellungen verlagerbaren Steuerknüppel (5) aufweist.

3 Einsatz in der Baubranche

## Beschreibung

Die Erfindung betrifft ein ziviles Kettenfahrzeug mit einem Tragrahmen und einem auf dem Tragrahmen angeordneten Aufbaurahmen, auf dem eine um eine Kippachse kippbare Kippmulde montiert ist, aufweisend eine Richtungssteuereinrichtung zur manuellen Steuerung von Lenk- und Fahrtrichtungsfunktionen des Kettenfahrzeugs, und eine Steuerungseinheit für eine Arbeitsfunktion des Kettenfahrzeugs, die ein Kippen der Kippmulde bewirkt.

Zivile Kettenfahrzeuge sind seit geraumer Zeit bekannt. Üblicherweise umfasst dabei die Richtungssteuereinrichtung ein Lenkrad zur manuellen Steuerung einer Lenkfunktion des Kettenfahrzeugs. Die Richtungssteuereinrichtung umfasst typischerweise einen zusätzlichen Wahlhebel, mittels welchem die Fahrtrichtungsfunktion des Kettenfahrzeugs betätigbar ist. Das Lenkrad ist separat zu dem Wahlhebel ausgebildet. Zudem ist bei herkömmlichen Kettenfahrzeugen eine gegenüber der Richtungssteuereinrichtung separate Steuerungseinheit für wenigstens eine Arbeitsfunktion des Kettenfahrzeugs vorgesehen. Herkömmliche Kettenfahrzeuge der eingangs genannten Art erfordern eine mehrhändige Bedienung ihrer Funktionen, was wegen der sich ergebenden koordinativen Herausforderungen besondere Konzentration des Fahrers erfordert. Insbesondere bei Ablenkung oder Ermüdung kann es daher schnell zu Bedienungsfehlern kommen.

Aufgabe der Erfindung ist es, ein ziviles Kettenfahrzeug zu schaffen, das gegenüber herkömmlichen Kettenfahrzeugen verbesserte Eigenschaften aufweist und insbesondere eine fehlersicherere Bedienung von Lenk-, Fahrtrichtungs- und wenigstens einer Arbeitsfunktion des Kettenfahrzeugs erlaubt.

Diese Aufgabe wird dadurch gelöst, dass die Richtungssteuereinrichtung und die Steuerungseinheit für die wenigstens eine Arbeitsfunktion in einer gemeinsamen Bedienungseinrichtung integriert sind, die einen einzelnen manuell betätigbaren und in mehrere Bedienstellungen verlagerbaren Steuerknüppel aufweist. Der Steuerknüppel wird auch als Joystick bezeichnet. Die Richtungssteuereinrichtung und die Steuerungseinheit können durch die erfindungsgemäße Lösung mittels nur einer Hand des Fahrers bedient werden. Dies erlaubt eine besonders komfortable Steuerung der Lenk- und Fahrtrichtungsfunktionen sowie wenigstens einer Arbeitsfunktion des zivilen Kettenfahrzeugs. Zudem können die sich bei herkömmlichen zivilen Kettenfahrzeugen ob der mehrhändigen Bedienung ihrer Funktionen ergebenden koordinativen Herausforderungen minimiert oder sogar beseitigt werden. Das erfindungsgemäße zivile Kettenfahrzeug erweist sich daher als besonders sicher gegenüber, insbesondere konzentrationsgeschuldeten, Bedienungsfehlern und kann auch von ungeübten Fahrern gesteuert werden.

Bei der Arbeitsfunktion kann es sich um ein Kippen oder/und Drehen eines Aufbaus des zivilen Kettenfahrzeugs handeln. Auch das Betätigen einer Seilwinde des Kettenfahrzeugs kann eine derartige Arbeitsfunktion darstellen. Mittels der Fahrtrichtungsfunktion lässt sich eine Fahrtrichtung des Kettenfahrzeugs festlegen und wechseln. Die Fahrtrichtungsfunktion erlaubt es also, dass ein Kettenfahrwerk des Kettenfahrzeugs wahlweise zum Vorwärts- oder zum Rückwärtsfahren angetrieben wird und zwischen den entsprechenden Antriebszuständen umzuschalten. Mit anderen Worten: Die Fahrtrichtungsfunktion umfasst einen Vorwärts- und einen Rückwärtsgang des Kettenfahrzeugs. Die Fahrtrichtungsfunktion kann zudem einen Neutralmodus umfassen, in dem bei aktivem Antriebsaggregat eine Antriebsverbindung zum Kettenfahrwerk unterbrochen ist. Der Neutralmodus kann einem Leerlauf entsprechen. Die Lenkfunktion erlaubt eine Rotationsbewegung des Kettenfahrzeugs um seine Hochachse, so um das Kettenfahrzeug auf der Stelle zu wenden oder - bei gleichzeitiger Betätigung der Fahrtrichtungsfunktion - bei Vorwärts- oder Rückwärtsfahrt entlang einer Kurve zu steuern. Dabei werden gegenüberliegende Kettenlaufwerke mit unterschiedlichen Geschwindigkeiten oder/und gegenläufig zueinander angetrieben.

Zweckmäßig handelt es sich bei dem zivilen Kettenfahrzeug um ein Baustellenfahrzeug. Das zivile Kettenfahrzeug ist vorzugsweise als Arbeitsfahrzeug, insbesondere auf einer Baustelle, einsetzbar, so für den Bau und die Wartung von Pipelines, von Strom- und Telefonleitungen und für ähnliche Zwecke.

In Ausgestaltung der Erfindung ist der Aufbaurahmen um eine in Hochrichtung des Kettenfahrzeugs verlaufende Drehachse drehbar relativ zu dem Tragrahmen angeordnet. Das Drehen des Aufbaurahmens bildet eine weitere Arbeitsfunktion des Kettenfahrzeugs, die durch den Steuerknüppel oder durch ein separates, manuell betätigbares Steuerglied bedient werden kann.

In weiterer Ausgestaltung der Erfindung ist der Steuerknüppel zum Steuern der Lenkfunktion um eine erste Schwenkachse schwenkbeweglich relativ zu einer Basiseinheit der Bedienungseinrichtung ausgebildet. Die erste Schwenkachse ist vorzugsweise entlang einer Fahrzeuglängsrichtung des Kettenfahrzeugs erstreckt. Entsprechend kann der Steuerknüppel in Fahrzeuglängsrichtung gesehen nach links geschwenkt werden, um das Kettenfahrzeug nach links zu wenden. Umgekehrt kann der Steuerknüppel nach rechts geschwenkt werden, um das Kettenfahrzeug nach rechts zu wenden. Dies bietet eine besonders intuitive Möglichkeit der manuellen Steuerung der Lenkfunktion.

In weiterer Ausgestaltung der Erfindung ist der Steuerknüppel zum Steuern einer Beschleunigungs- oder/und Bremsfunktion des zivilen Kettenfahrzeugs um eine, insbesondere winklig gegen die erste Schwenkachse angestellte, zweite Schwenkachse schwenkbeweglich relativ zu der Basiseinheit ausgebildet. Alternativ oder zusätzlich kann zum Steuern der Beschleunigungs- oder/und Bremsfunktion, insbesondere jeweils, wenigstens ein Pedal des zivilen Kettenfahrzeugs vorgesehen sein. Die zweite Schwenkachse kann entlang einer Breitenrichtung des zivilen Kettenfahrzeugs verlaufen, so dass die Beschleunigungs- oder/und Bremsfunktion des zivilen Kettenfahrzeugs durch ein in Fahrzeuglängsrichtung gesehen Nachvorne- oder/und Nachhintenschwenken des Steuerknüppels steuerbar ist. Der Steuerknüppel lässt sich also in die Richtung bewegen, in die eine auf das Kettenfahrzeug wirkende Beschleunigung oder/und Verzögerung gerichtet sein soll.

In weiterer Ausgestaltung der Erfindung weist die Richtungssteuereinrichtung ein an dem Steuerknüppel angeordnetes erstes Betätigungselement, insbesondere Kippschalter und/oder Taster, zum Steuern der Fahrtrichtungsfunktion auf. Dies ermöglicht ein besonders schnelles Betätigen der Fahrtrichtungsfunktion durch den Fahrer, wenn dieser mit einer Hand den Steuerknüppel umgreift. Insbesondere ist das erste Betätigungselement so angeordnet, dass es mittels eines Daumens des Fahrers betätigbar ist, wenn er den Steuerknüppel umgreift.

In weiterer Ausgestaltung der Erfindung weist die Steuerungseinheit je Arbeitsfunktion ein am Steuerknüppel angeordnetes zweites Betätigungselement, insbesondere Wippenschalter und/oder Taster, zum Steuern der jeweiligen Arbeitsfunktion auf. Der Fahrer kann somit die Arbeitsfunktion mit derselben Hand betätigen, mit welcher er auch die Lenkfunktion und die Fahrtrichtungsfunktion manuell steuert. Ein fehleranfälliges und zeitaufwändiges Umgreifen zum Steuern der einzelnen Funktionen ist nicht erforderlich. Das zweite Betätigungselement kann verstellbar sein zwischen einer ersten und einer zweiten Steuerposition. Wenn die betreffende Arbeitsfunktion zwei gegenspielende Anteile aufweist, lassen sich somit beide dieser Anteile mittels des zweiten Betätigungselements steuern. Bei solchen gegenspielenden Anteilen kann es sich beispielsweise um ein Auf- und ein Abwickeln einer Seilwinde des Kettenfahrzeugs handeln. Auch ein Auf- und ein Abkippen des Aufbaus des Kettenfahrzeugs können derartige gegenspielende Anteile darstellen. Gleiches gilt für ein Drehen des Aufbaus mit und entgegen dem Uhrzeigersinn.

In weiterer Ausgestaltung der Erfindung weist die Steuerungseinheit wenigstens ein am Steuerknüppel angeordnetes drittes Betätigungselement, insbesondere Taster, zum Aktivieren oder Deaktivieren, insbesondere Sperren, wenigstens einer Arbeitsfunktion auf. Es versteht sich, dass mittels des dritten Betätigungselements die wenigstens eine Arbeitsfunktion aktiviert, insbesondere entsperrt, werden kann, wenn sie sich zuvor in einem deaktivierten oder gesperrten Zustand befindet. Dies hilft, einem unbeabsichtigten Betätigen der wenigstens eine Arbeitsfunktion entgegenzuwirken. Es ist denkbar, die Arbeitsfunktion selbsttätig durch eine automatische Steuerung in den gesperrten Zustand zu versetzen, wenn ein Betriebsparameter des Kettenfahrzeugs einen vorbestimmten Schwellwert überschreitet. Bei einem derartigen Betriebsparameter kann es sich beispielsweise um eine Schlupferfassung oder eine auf das Kettenfahrzeug übertragene Neigung eines Untergrunds handeln.

In weiterer Ausgestaltung der Erfindung ist an dem Steuerknüppel ein viertes Betätigungselement, insbesondere Taster, zum Betätigen einer akustischen Funktion des Kettenfahrzeugs angeordnet. Bei der akustischen Funktion kann es sich um ein Warnsignal, insbesondere eine Hupe, des Kettenfahrzeugs handeln. Vorteilhaft lässt sich somit mittels des Steuerknüppels eine weitere Funktion des Kettenfahrzeugs manuell steuern.

Zweckmäßig ist der Steuerknüppel einenends gelenkig mit der Basiseinheit verbunden, wobei anderenends ein Griffabschnitt zur manuellen Betätigung des Steuerknüppels angeordnet ist. Dies ermöglicht eine besonders ergonomische manuelle Steuerung der Funktionen des Kettenfahrzeugs.

Zweckmäßig sind die Lenkfunktion, die Fahrtrichtungsfunktion und die wenigstens eine Arbeitsfunktion ausschließlich mittels der Bedieneinheit, insbesondere mittels des Steuerknüppels, steuerbar. Dies spart Bauraum.

In weiterer Ausgestaltung der Erfindung ist die Bedienungseinrichtung an einem Fahrersitz des Kettenfahrzeugs, insbesondere an einer Armlehne des Fahrersitzes, angeordnet. Vorteilhaft überträgt sich somit eine Verstellung oder Verdrehung des Fahrersitzes direkt auch auf die Bedienungseinrichtung. Eine aufwändige Relativpositionierung der Bedienungseinrichtung zum Fahrersitz ist dabei nicht erforderlich. Die Verstellung des Fahrersitzes kann entlang der Hochachse des Kettenfahrzeugs oder/und entlang der Fahrzeuglängsrichtung oder/und entlang einer Fahrzeugquerrichtung erfolgen.

In weiterer Ausgestaltung der Erfindung ist auf dem Aufbaurahmen ein Fahrerhaus angeordnet. Vorzugsweise ist das Fahrerhaus versetzt zu der Kippmulde auf dem Aufbaurahmen angeordnet.

In weiterer Ausgestaltung der Erfindung ist ein auf einem Tragrahmen des Kettenfahrzeugs angeordneter Aufbaurahmen vorhanden, auf welchem ein mittels wenigstens einer der Arbeitsfunktionen um wenigstens eine Kippachse relativ zum Tragrahmen kippbarer Aufbau montierbar ist. Bei dem Aufbau kann es sich um eine Kippmulde handeln. Ein solcher kippbarer Aufbau erlaubt ein besonders schnelles Abladen von mittels des Aufbaus transportierter Ladung. In einer alternativen Ausgestaltung kann auf dem Aufbaurahmen ein relativ zum Tragrahmen starrer Aufbau montierbar sein.

In weiterer Ausgestaltung der Erfindung ist der Aufbaurahmen um eine quer zur Kippachse, insbesondere entlang einer Hochrichtung des Kettenfahrzeugs, verlaufende Drehachse mittels einer weiteren Arbeitsfunktion des Kettenfahrzeugs drehbar relativ zum Tragrahmen. Somit lässt sich ein Ort des Abladens der Ladung um das Kettenfahrzeug herum präzise einstellen, ohne dass dies ein Umsetzen des zivilen Kettenfahrzeugs erfordert. Die Hochachse des Kettenfahrzeugs kann entlang der Hochrichtung erstreckt sein.

In weiterer Ausgestaltung der Erfindung ist auf dem Tragrahmen oder auf dem Aufbaurahmen, insbesondere versetzt zu dem Aufbau, ein Fahrerhaus angeordnet. Die Bedienungseinrichtung ist vorzugsweise in einem Innenraum des Fahrerhauses vorhanden. Wenn das Fahrerhaus auf dem Tragrahmen angeordnet ist, kann der Aufbaurahmen relativ zum Fahrerhaus gekippt und gegebenenfalls gedreht werden. Wenn das Fahrerhaus auf dem Aufbaurahmen angeordnet ist, kann der Aufbaurahmen mitsamt dem Fahrerhaus relativ zum Tragrahmen gedreht werden.

Zweckmäßig sind wenigstens zwei, insbesondere alle, der mittels der Bedienungseinrichtung steuerbaren Funktionen simultan steuerbar. Dies spart Zeit bei der Verwendung des Kettenfahrzeugs, insbesondere auf einer Baustelle.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

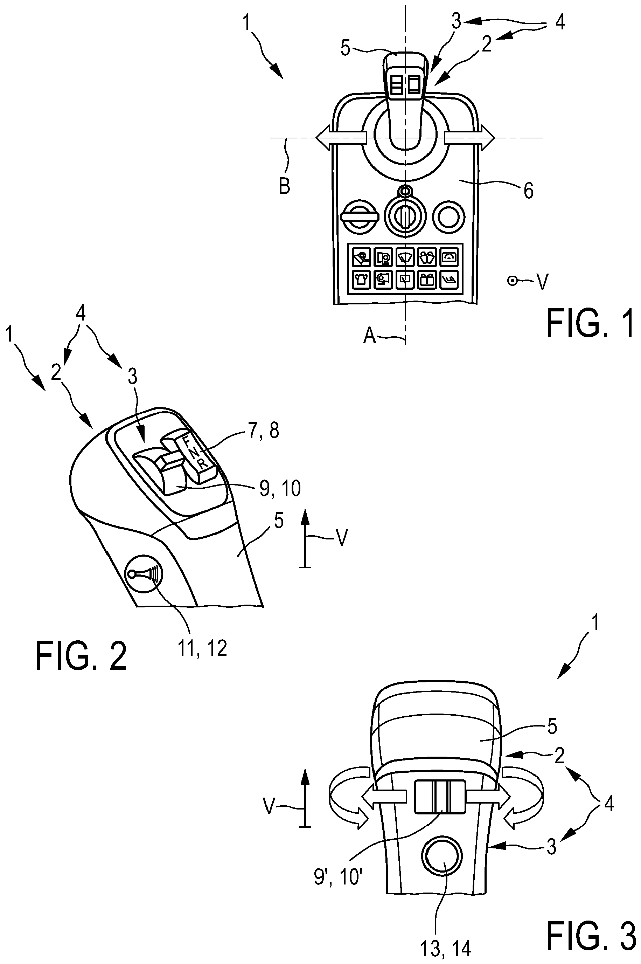

- Fig. 1: zeigt in einer Draufsicht eine Bedienungseinrichtung einer Ausführungsform eines erfindungsgemäßen zivilen Kettenfahrzeugs,
- Fig. 2: in einer perspektivischen Darstellung ein Detail der Bedienungseinrichtung des zivilen Kettenfahrzeugs nach Fig. 1,
- Fig. 3: in einer Vorderansicht ein Detail der Bedienungseinrichtung des zivilen Kettenfahrzeugs nach den Fig. 1 und 2,

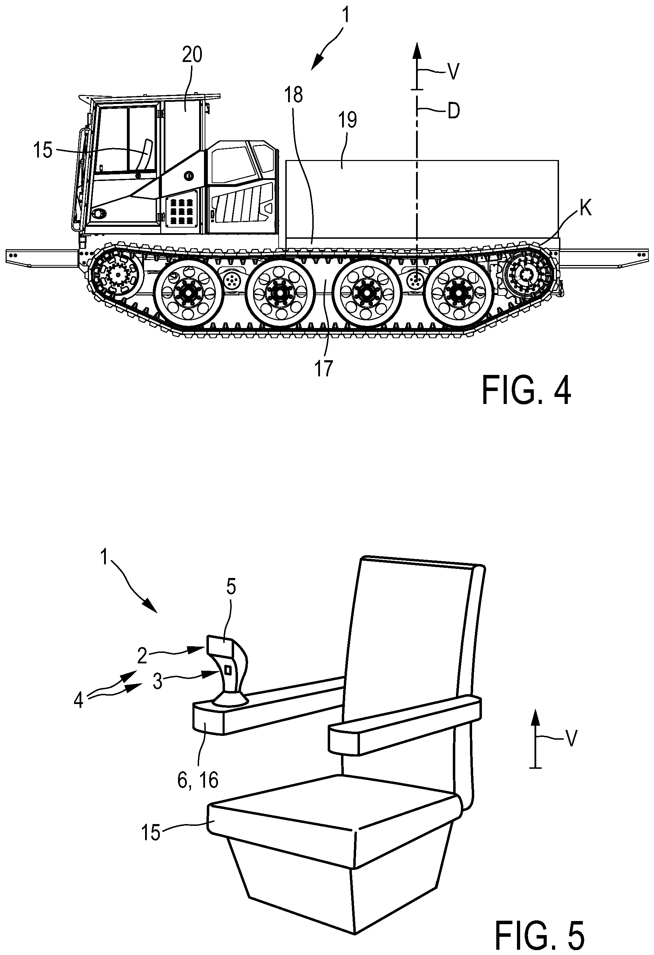

- Fig. 4: in einer Seitendarstellung das zivile Kettenfahrzeug nach den Fig. 1 bis 3,
- Fig. 5: in perspektivischer Darstellung einen Fahrersitz des zivilen Kettenfahrzeugs nach den Fig. 1 bis 4.

Ein ziviles Kettenfahrzeug 1 kann zur Verwendung auf einer Baustelle eingerichtet sein. Bei dem zivilen Kettenfahrzeug 1 kann es sich entsprechend um ein Baustellenfahrzeug handeln. Das zivile Kettenfahrzeug 1 ist vorzugsweise als Arbeitsfahrzeug einsetzbar, so für den Bau und die Wartung von Pipelines, von Strom- und Telefonleitungen und für ähnliche Zwecke.

Das zivile Kettenfahrzeug 1 weist eine Richtungssteuereinrichtung 2 auf. Die Richtungssteuereinrichtung 2 dient zur manuellen Steuerung von Lenk- und Fahrtrichtungsfunktionen des Kettenfahrzeugs 1. Das Kettenfahrzeug 1 weist vorliegend ein Kettenfahrwerk mit zwei einander gegenüberliegenden Kettenlaufwerken auf. Zum Lenken des Kettenfahrzeugs 1 können seine beiden Kettenlaufwerke mit unterschiedlichen Umlaufgeschwindigkeiten angetrieben werden. Die Kettenlaufwerke können gleich- oder gegenläufig in zwei einander entgegengesetzten Umlaufrichtungen angetrieben werden. Somit kann das Kettenfahrzeug 1 sich auf der Stelle drehen oder vorwärts- oder rückwärtsfahren. Die Funktion des Vorwärts- oder Rückwärtsfahrens sowie des Lenkens oder Drehens des Kettenfahrzeugs entspricht der Fahrtrichtungsfunktion. Mit anderen Worten: Mittels der Richtungssteuereinrichtung 2 lässt sich das Kettenfahrzeug 1 einerseits lenken und andererseits festlegen, ob das Kettenfahrzeug 1 vorwärts- oder rückwärtsfährt.

Das zivile Kettenfahrzeug 1 umfasst ferner eine Steuerungseinheit 3 für wenigstens eine Arbeitsfunktion des Kettenfahrzeugs 1. Bei der Arbeitsfunktion des Kettenfahrzeugs 1 kann es sich um ein Drehen oder ein Kippen eines Aufbaus 19 des Kettenfahrzeugs 1 handeln. Alternativ oder zusätzlich kann eine Arbeitsfunktion vorgesehen sein, gemäß welcher eine Seilwinde des Kettenfahrzeugs 1 gesteuert wird. Die Richtungssteuereinrichtung 2 und die Steuerungseinheit 3 für die wenigstens eine Arbeitsfunktion sind in einer gemeinsamen Bedienungseinrichtung 4 integriert. Die Bedienungseinrichtung 4 weist einen einzelnen Steuerknüppel 5 auf. Der Steuerknüppel 5 ist manuell betätigbar. Der Steuerknüppel 5 ist in mehrere Bedienstellungen verlagerbar.

Vorliegend umfasst die Bedienungseinrichtung 4 eine Basiseinheit 6. Dabei ist der Steuerknüppel 5 um eine erste Schwenkachse A relativ zu der Basiseinheit 6 schwenkbeweglich ausgebildet. Die Lenkfunktion wird durch Schwenken des Steuerknüppels 5 um die erste Schwenkachse A gesteuert. Zum Beschleunigen oder/und Verzögern des zivilen Kettenfahrzeugs 1 kann eine Beschleunigungs- oder/und Bremsfunktion vorgesehen sein. Die Beschleunigungsfunktion oder/und Bremsfunktion können mittels wenigstens eines Pedals gesteuert werden. Es kann jeweils ein Pedal für die Bremsfunktion und eines für die Beschleunigungsfunktion vorhanden sein.

Alternativ oder zusätzlich zu dem wenigstens einen Pedal kann der Steuerknüppel 5 um eine zweite Schwenkachse B relativ zu der Basiseinheit 6 schwenkbeweglich ausgebildet sein, um die Bescheinigungsfunktion oder/und die Bremsfunktion zu steuern. Die zweite Schwenkachse B kann winkelig gegen die erste Schwenkachse A angestellt sein. Vorliegend verläuft die zweite Schwenkachse B entlang einer Fahrzeuglängsrichtung des zivilen Kettenfahrzeugs 1. Die erste Schwenkachse A verläuft dabei entlang einer Fahrzeugquerrichtung, die senkrecht zur Fahrzeuglängsrichtung und senkrecht zu einer Hochachse des Kettenfahrzeugs 1 verläuft.

Die Richtungssteuereinrichtung 2 weist bei der gezeigten Ausführungsform ein erstes Betätigungselement 7 auf. Das erste Betätigungselement 7 ist an dem Steuerknüppel 5 angeordnet. Das erste Betätigungselement 7 ist vorliegend als Kippschalter 8 ausgebildet. Das erste Betätigungselement 7 kann als Taster ausgebildet sein. Mittels des ersten Betätigungselements 7 ist die Fahrtrichtungsfunktion steuerbar. Der Kippschalter 8 kann zwischen wenigstens zwei Steuerpositionen verstellt werden. In einer ersten der Steuerpositionen kann die Fahrtrichtungsfunktion ein Vorwärtsfahren des Kettenfahrzeugs 1 erlauben. In der zweiten Steuerposition kann die Fahrtrichtungsfunktion ein Rückwärtsfahren des Kettenfahrzeugs 1 erlauben. Es kann ferner eine dritte Steuerposition des Kippschalters 8 vorgesehen sein, in welcher die Fahrtrichtungsfunktion neutral ist. In der dritten Steuerposition erfolgt kein Antrieb des Kettenfahrwerks des Kettenfahrzeugs 1. In der dritten Steuerposition kann ein Neutralmodus der Fahrtrichtungsfunktion aktiv sein.

Die Steuerungseinheit 3 umfasst vorliegend je Arbeitsfunktion ein zweites Betätigungselement 9, 9'. Das Kettenfahrzeug 1 weist vorliegend zwei Arbeitsfunktionen auf. Entsprechend sind zwei zweite Betätigungselemente 9, 9' am Steuerknüppel 5 angeordnet. Das zweite Betätigungselement 9, 9` ist beispielsweise als Wippenschalter 10, 10' ausgebildet. Das zweite Betätigungselement 9, 9' kann als Taster ausgebildet sein. Das zweite Betätigungselement 9, 9' dient zum Steuern der jeweiligen Arbeitsfunktion. Der Wippenschalter 10, 10' ist zwischen zwei Steuerpositionen verstellbeweglich. Dabei stellt sich der Wippenschalter 10, 10` vorliegend selbsttätig in eine neutrale zwischen seinen beiden Steuerpositionen gelegene Mittenstellung zurück. In der neutralen Steuerposition des jeweiligen Wippenschalters 10, 10` wird die betreffende Arbeitsfunktion nicht betätigt. In den beiden Steuerpositionen des Wippenschalter 10, 10` lassen sich jeweils gegenspielende Anteile der betreffenden Arbeitsfunktion steuern. Wippenachsen der Wippenschalter 10, 10' können winkelig gegeneinander angestellt sein.

Vorliegend weist die Steuerungseinheit 3 ferner ein am Steuerknüppel 5 angeordnetes drittes Betätigungselement 13 auf. Das dritte Betätigungselement 13 ist beispielsweise als Taster 14 ausgebildet. Das dritte Betätigungselement 13 dient zum Aktivieren oder Deaktivieren wenigstens einer Arbeitsfunktion. Vorliegend lassen sich beide Arbeitsfunktionen des Kettenfahrzeugs 1 mittels des dritten Betätigungselements 13 aktivieren oder deaktivieren. Insbesondere können die Arbeitsfunktionen mittels des dritten Betätigungselements 13 gesperrt werden. Wenn die Arbeitsfunktionen deaktiviert oder gesperrt sind, können sie nicht mittels des zweiten Betätigungselements 9, 9` gesteuert werden. Die Deaktivierung oder Sperre der Arbeitsfunktion lässt sich mittels des dritten Betätigungselements 13 aufheben.

An dem Steuerknüppel 5 ist vorliegend ferner ein viertes Betätigungselement 11 angeordnet. Das vierte Betätigungselement 11 kann als Taster 12 ausgebildet sei. Das vierte Betätigungselement 11 dient zum Betätigen einer akustischen Funktion des Kettenfahrzeugs 1. Beispielsweise kann mittels des Betätigungselements 11 ein akustisches Warnsignal des Kettenfahrzeugs 1 gesteuert werden. Mittels des Betätigungselements 11 kann eine Hupe des Kettenfahrzeugs 1 betätigt werden.

Der Steuerknüppel 5 ist vorliegend einenends gelenkig mit der Basiseinheit 6 verbunden. Anderenends weist der Steuerknüppel 5 einen Griffabschnitt zu seiner manuellen Betätigung auf. Die beiden zweiten Betätigungselemente 9, 9` können an einander gegenüberliegenden Seiten des Steuerknüppels 5 angeordnet sein. Die Betätigungselemente 7, 9 und 11 können an dem Steuerknüppel 5 so angeordnet sein, dass sie mittels eines Daumens des Fahrers betätigbar sind, wenn dieser den Steuerknüppel 5 an dem Griffabschnitt umgreift. Die Betätigungselemente 9', 13 können an dem Steuerknüppel 5 derart angeordnet sein, dass sie mittels eines Zeigefingers oder/und eines Mittelfingers des Fahrers betätigbar sind, wenn dieser den Steuerknüppel 5 an dem Griffabschnitt umgreift.

Beim gezeigten zivilen Kettenfahrzeug 1 ist die Bedienungseinrichtung 4 an einem Fahrersitz 15 des Kettenfahrzeugs 1 angeordnet. Beispielsweise ist die Bedienungseinrichtung 4 an einer Armlehne 16 des Fahrsitzes 15 angeordnet. Vorliegend ist die Basiseinheit 6 der Bedienungseinrichtung 4 in die Armlehne 16 integriert. Der Fahrersitz 15 kann höhen- oder/und seiten- oder/und drehverstellbar ausgebildet sein. Bei einem Verstellen oder Verdrehen des Fahrersitzes 15 behält die Bedienungseinrichtung 4 ihre Position relativ zum Fahrersitz 15. Der Fahrersitz 15 wird dann also mitsamt der Bedienungseinrichtung 4 verstellt oder verdreht. Bei einer alternativen und in den Figuren nicht gezeigten Ausführungsform des erfindungsgemäßen zivilen Kettenfahrzeugs 1 kann die Bedienungseinrichtung 4 abseits des Fahrersitzes 15 angeordnet sein, beispielsweise an einem Armaturenbrett, an einer Mittel- oder Seitenkonsole.

Das Kettenfahrzeug 1 weist vorliegend einen Tragrahmen 17 auf. Auf dem Tragrahmen 17 ist ein Aufbaurahmen 18 angeordnet. Auf dem Aufbaurahmen 18 ist ein Aufbau 19 montierbar. Der Aufbau 19 ist mittels einer der Arbeitsfunktionen des Kettenfahrzeugs 1 relativ zu dem Tragrahmen 17 um eine Kippachse K kippbar. Ein Auf- und ein Abkippen können gegenspielende Anteile der Kipp-Arbeitsfunktion darstellen. Bei dem Aufbau 19 kann es sich um eine Kippmulde handeln. Der Aufbaurahmen 18 ist um eine quer zur Kippachse K verlaufende Drehachse D mittels der weiteren Arbeitsfunktion des Kettenfahrzeugs 1 relativ zum Tragrahmen 17 drehbar. Ein Drehen des Aufbaurahmens 18 mit und entgegen dem Uhrzeigersinn können gegenspielende Anteile der Dreh-Arbeitsfunktion darstellen. Die Drehachse D verläuft vorliegend entlang einer Hochrichtung V des Kettenfahrzeugs 1. Die Wippenachse des Wippenschalter 10 kann parallel zur Kippachse K verlaufen. Die Wippenachse des Wippenschalters 10` kann parallel zur Drehachse D verlaufen.

Das zivile Kettenfahrzeug 1 ist vorliegend außerdem mit einem Fahrerhaus 20 ausgestattet. Das Fahrerhaus 20 ist bei der gezeigten Ausführungsform auf dem Tragrahmen angeordnet. Alternativ kann das Fahrerhaus 20 auf dem Aufbaurahmen 18 angeordnet sein. Das Fahrerhaus 20 kann versetzt zum Aufbau 19 auf dem Aufbaurahmen 18 angeordnet sein. Vorliegend ist der Aufbau 19 relativ zum Tragrahmen 17 und relativ zum Fahrerhaus 20 drehund kippbar. Wenn das Fahrerhaus 20 auf dem Aufbaurahmen 18 angeordnet ist, kann der Aufbaurahmen 18 mitsamt dem Fahrerhaus 20 relativ zum Tragrahmen 17 gedreht werden. In diesem Fall kann der Aufbau 19 relativ zum Aufbaurahmen 18 und relativ zum Fahrerhaus 20 in jeder Drehstellung des Aufbaurahmens 18 gekippt werden. - - - - - - - - - - - - - -

## Patentansprüche

1. Ziviles Kettenfahrzeug (1) mit einem Tragrahmen (17) und einem auf dem Tragrahmen (17) angeordneten Aufbaurahmen (18), auf dem eine um eine Kippachse (K) kippbare Kippmulde montiert ist, aufweisend
eine Richtungssteuereinrichtung (2) zur manuellen Steuerung von Lenk- und Fahrtrichtungsfunktionen des Kettenfahrzeugs (1), und
eine Steuerungseinheit (3) für wenigstens eine Arbeitsfunktion des Kettenfahrzeugs (1), die ein Kippen der Kippmulde bewirkt,
**dadurch gekennzeichnet, dass**
die Richtungssteuereinrichtung (2) und die Steuerungseinheit (3) für die wenigstens eine Arbeitsfunktion in einer gemeinsamen Bedienungseinrichtung (4) integriert sind, die einen einzelnen manuell betätigbaren und in mehrere Bedienstellungen verlagerbaren Steuerknüppel (5) aufweist.

2. Ziviles Kettenfahrzeug nach Anspruch 1, **dadurch gekennzeichnet, dass** der Aufbaurahmen (18) um eine in Hochrichtung des Kettenfahrzeugs verlaufende Drehachse (D) drehbar relativ zu dem Tragrahmen (17) angeordnet ist,

3. Ziviles Kettenfahrzeug (1) nach Anspruch 1 oder 2, **dadurch gekennzeichnet, dass** der Steuerknüppel (5) zum Steuern der Lenkfunktion um eine erste Schwenkachse (A) schwenkbeweglich relativ zu einer Basiseinheit (6) der Bedienungseinrichtung (4) ausgebildet ist.

4. Ziviles Kettenfahrzeug (1) nach Anspruch 1, 2 oder 3, **dadurch gekennzeichnet, dass** der Steuerknüppel (5) zum Steuern einer Beschleunigungs- oder/und Bremsfunktion des zivilen Kettenfahrzeugs (1) um eine, insbesondere winkelig gegen die erste Schwenkachse (A) angestellte, zweite Schwenkachse (B) schwenkbeweglich relativ zu der Basiseinheit (6) ausgebildet ist.

5. Ziviles Kettenfahrzeug (1) nach einem der vorhergehenden Ansprüche, **dadurch gekennzeichnet, dass** die Richtungssteuereinrichtung (2) ein am Steuerknüppel (5) angeordnetes erstes Betätigungselement (7), insbesondere Kippschalter (8) und/oder Taster, zum Steuern der Fahrtrichtungsfunktion aufweist.

6. Ziviles Kettenfahrzeug (1) nach einem der vorhergehenden Ansprüche, **dadurch gekennzeichnet, dass** die die Steuerungseinheit (3) je Arbeitsfunktion ein am Steuerknüppel (5) angeordnetes zweites Betätigungselement (9, 9`), insbesondere Wippenschalter (10, 10`) und/oder Taster, zum Steuern der jeweiligen Arbeitsfunktion aufweist.

7. Ziviles Kettenfahrzeug (1) nach einem der vorhergehenden Ansprüche, **dadurch gekennzeichnet, dass** die Steuerungseinheit (3) wenigstens ein am Steuerknüppel (5) angeordnetes drittes Betätigungselement (13), insbesondere Taster (14), zum Aktivieren oder Deaktivieren, insbesondere Sperren, wenigstens einer Arbeitsfunktion aufweist.

8. Ziviles Kettenfahrzeug (1) nach einem der vorhergehenden Ansprüche, **dadurch gekennzeichnet, dass** an dem Steuerknüppel (5) ein viertes Betätigungselement (11), insbesondere Taster (12), zum Betätigen einer akustischen Funktion des Kettenfahrzeugs (1) angeordnet ist.

9. Ziviles Kettenfahrzeug (1) nach einem der vorhergehenden Ansprüche, **dadurch gekennzeichnet, dass** die Bedienungseinrichtung (4) an einem Fahrersitz (15) des Kettenfahrzeugs (1), insbesondere an einer Armlehne (16) des Fahrersitzes (15), angeordnet ist.

10. Ziviles Kettenfahrzeug (1) nach einem der vorhergehenden Ansprüche, **dadurch gekennzeichnet, dass** auf dem Aufbaurahmen (18) ein Fahrerhaus (20) angeordnet ist.

11. Ziviles Kettenfahrzeug (1) nach Anspruch 10, **dadurch gekennzeichnet, dass** das Fahrerhaus (20) versetzt zu der Kippmulde auf dem Aufbaurahmen angeordnet ist.
